(19) Europäisches Patentamt / European Patent Office / Office européen des brevets

(11) **EP 3 763 596 B1**

(12) **EUROPEAN PATENT SPECIFICATION**

(45) Date of publication and mention
of the grant of the patent:
**17.01.2024 Bulletin 2024/03**

(21) Application number: **20184802.5**

(22) Date of filing: **08.07.2020**

(51) International Patent Classification (IPC):
*B61L 27/20* (2022.01)    *B61L 27/40* (2022.01)
*B61L 27/53* (2022.01)    *B61L 27/50* (2022.01)
*G06F 21/64* (2013.01)    *H04L 9/32* (2006.01)
*B61L 27/70* (2022.01)    *B61L 19/16* (2006.01)
*H04L 9/00* (2022.01)

(52) Cooperative Patent Classification (CPC):
**B61L 19/16; B61L 27/20; B61L 27/40; B61L 27/53;
B61L 27/70; G06F 21/64; H04L 9/3239; H04L 9/50**

(54) **SYSTEM FOR DISTRIBUTED INTERLOCKING IN A RAILWAY NETWORK**

SYSTEM ZUR VERTEILTEN VERRIEGELUNG IN EINEM EISENBAHNNETZ

SYSTÈME DE VERROUILLAGE DISTRIBUÉ DANS UN RÉSEAU FERROVIAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2019 IN 201941027523**

(43) Date of publication of application:
**13.01.2021 Bulletin 2021/02**

(73) Proprietor: **ALSTOM Holdings**
**93400 Saint-Ouen-sur-Seine (FR)**

(72) Inventor: **GANESAN, Muniandi**
**626001 Virudhunagar (IN)**

(74) Representative: **Lavoix**
**2, place d'Estienne d'Orves**
**75441 Paris Cedex 09 (FR)**

(56) References cited:
**EP-A2- 1 769 996    CN-A- 109 677 461**

- **FERAS NASER: "REVIEW : THE POTENTIAL USE
OF BLOCKCHAIN TECHNOLOGY IN RAILWAY
APPLICATIONS : AN INTRODUCTION OF A
MOBILITY AND SPEECH RECOGNITION
PROTOTYPE", 2018 IEEE INTERNATIONAL
CONFERENCE ON BIG DATA (BIG DATA), 1
December 2018 (2018-12-01), pages 4516-4524,
XP055698022, DOI:
10.1109/BigData.2018.8622234 ISBN:
978-1-5386-5035-6**
- **MICHAEL KUPERBERG ET AL: "Are Smart
Contracts and Blockchains Suitable for
Decentralized Railway Control?", ARXIV.ORG,
CORNELL UNIVERSITY LIBRARY, 201 OLIN
LIBRARY CORNELL UNIVERSITY ITHACA, NY
14853, 18 January 2019 (2019-01-18),
XP081005537,**

**Description**

The present invention concerns a system for distributed interlocking of track field objects of a railway network.

The field of the invention is the field of supervision of railway networks, and in particular the interlocking of track field objects.

In a known manner, railway networks comprise trains which are adapted to move on tracks. In order to ensure a smooth and safe functioning of a railway network, the network further comprises so called track field objects, such as signals and point machines, which are actuated by field object controllers. Furthermore, the tracks comprise track circuits which are associated to sections of a track and are adapted to provide a status of the track section.

Classically, a centralized interlocking system ensures safe movement of trains on the tracks, by centrally commanding locking of signals and point machines, so as to ensure that a given train may run safely on a track section without any risk of collision with another train. Classically, the interlocking systems where made of electromechanical relays.

More recently, the centralized interlocking systems are computer systems which send commands to field object controllers.

EP 1 769 996 A2 discloses a system for interlocking of track field objects of a railway network.

Centralized interlocking systems put a limitation on the scalability and can add latency to the overall operational time in case of complex track configuration.

The present invention aims to remedy to these drawbacks, by proposing a distributed interlocking wherein the overall operational latency is reduced and the computational load is reduced.

This and other objects are achieved by a system for distributed interlocking of track field objects of a railway network as claimed in claim 1.

In embodiments of the invention, the system for distributed interlocking comprises one or more of the features introduced in the dependent claims 2 to 11, considered alone or according to all technically possible combinations.

Further characteristics and advantages of the present invention will become apparent from the following description, provided merely by way of non-limiting example, with reference to the enclosed drawings, in which:

- Figure 1 shows a system for distributed interlocking of track field objects of a railway network according to an embodiment of the present invention;
- Figure 2 represents schematically an example of a section of tracks, associated track field objects and associated point blocks;
- Figure 3 represents schematically an example of smart contract on a route associated to a section of tracks;
- Figure 4 shows steps of a method for distributed interlocking of track field objects according to an embodiment of the present invention.

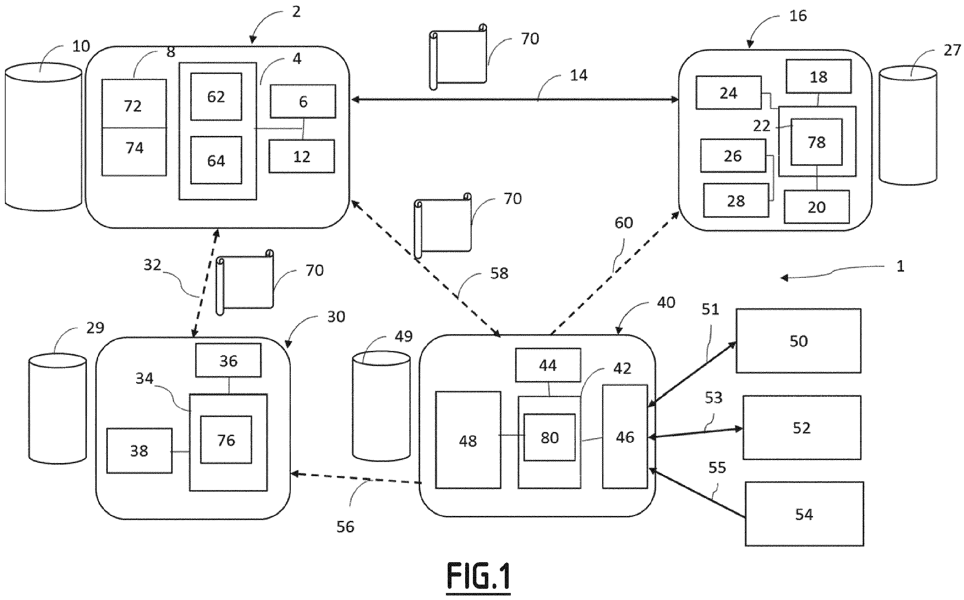

An embodiment of a system for distributed interlocking of track field objects of a railway network is illustrated in figure 1.

The distributed interlocking system 1 comprises a central automatic train supervision (ATS) system 2, which is for example implemented in an operational control center. The ATS system comprises at least one processor 4, configured to execute code instructions, a first wireless communication interface 6 adapted to transmit/receive radio communications, an electronic database 8 adapted to store data. The ATS system 2 further comprises an electronic storage 10 adapted to store a blockchain master ledger archival as explained in further detail hereafter.

The electronic database 8 stores in particular a control table 72 which memorizes all possible routes within a given perimeter and a centralized Boolean database 74.

The ATS system 2 further comprises a second communication interface 12 for wired communications according to a given communication protocol.

The ATS system 2 is adapted to communicate, via a wired communication link 14, which is bi-directional and secure, with a Human Machine Interface (HMI) 16, located for example in the same operational control center as the ATS system 2, which is also part of the distributed interlocking system 1.

The HMI 16 comprises at least one display 18 (e.g. a screen), and at least one interface device 20, such as a keyboard or a mouse, or a tactile interface configured to receive commands from an operator. The display 18 and the interface device 20 are connected to a processor 22, configured to execute code instructions. Moreover, the HMI 16 comprises an electronic database 24, adapted to store data related to the tracks of the railway network and to the trackside field objects. The HMI further comprises a wireless communication interface 26 adapted to transmit/receive radio communications, and a communication interface 28 for wired communications. The HMI 16 comprises or is connected to an electronic storage 27 adapted to store a blockchain distributed ledger as explained in further detail hereafter.

The ATS system 2 is further adapted to communicate, via a wireless bidirectional communication link 32, with an Automatic Train Control (ATC) system 30, which is onboard of a given train, and adapted to control the train movement.

In practice, a same ATS system 2 is adapted to communicate with several ATC systems, but in order to simplify the explanation, only one ATC system is represented here.

The ATC system comprises a processor 34, configured to execute code instructions, connected to a wireless communication interface 36 adapted to transmit/receive radio communications and to an internal electronic storage unit 38. Furthermore, the ATC system 30 comprises or is connected to an electronic storage 29 adapted to store a blockchain distributed ledger as explained in further detail hereafter.

The distributed interlocking system 1 further comprises a number of track field object controllers 40, also called simply field object controller.

To ease the explanation, only one field object controller 40 is represented. However, the invention is not limited to a system comprising a single field object controller, any number of field object controllers may be considered.

The field object controller 40 is a device which is adapted to control or monitor the status of a plurality of field objects related to a section of a track (or track field objects), including track circuits, signals and point machines.

The field object controller 40 comprises a processor 42, configured to execute code instructions, connected to a wireless communication interface 44 adapted to transmit/receive radio communications and to an interface 46 for wired communications according to a predetermined communication protocol.

The processor 42 is connected via communication bus to an internal electronic storage unit 48. Furthermore, the field object controller 40 comprises or is connected to an electronic storage 49 adapted to store a blockchain distributed ledger as explained in further detail hereafter.

The field object controller 40 is adapted to communicate, preferably via wired connections 51, 53, 55 with a plurality of field objects comprising different devices such as: M signals 50, N point machines 52 and Q track circuits 54. The numbers M, N, Q are any integer numbers. In figure 1, only one field object of each type has been represented.

Each field object is equipped with a communication interface and is adapted to transmit data to the field object controller 40, in particular status data indicating the status of each field object. Preferably, a wired communication is used to safety purposes.

The field object controller 40 is adapted to send commands to the field objects via the communication links 51, 53, in particular commands to change the status of a given field object.

The status of a field object is related to the function of the field object on the track.

For example, a signal 50 is adapted to change color, to indicate whether passage is authorized or forbidden, for example a signal is adapted to take the Green and Red colors. Other type of status change for a signal may be envisaged, such as flickering or non-flickering; more than two colors.

The status of a track circuit 54 indicates whether a train is present or not on an associated section of the track. Therefore, a status associated with a track circuit indicates whether the track section is available or occupied.

A point machine 52 is a device for operating railway turnouts at distance. The status of a point machine indicates a switch position at a junction of tracks. In a simple example, the status of a point machine which switches between 2 positions may be indicated as normal and reverse.

The field object controller 40 is configured to communicate, advantageously via wireless communication links 56, 58 respectively with the ATC system 30 and the ATS system 2.

Advantageously, the field object controller 40 is also configured to communicate, via wireless communication link 60 with the HMI 16.

According to an embodiment of the invention, the processor 4 of the ATS system 2 is configured to implement software modules of executable code instructions: a module 62 which computes a digital twin of the ATC system 30 onboard a given train and a module 64 which generates, in real-time, smart contracts 70. A generated smart contract 70 is distributed, at the same time, to the ATC system 30, the HMI 16 and the field object controller 40.

A smart contract 70 comprises a set of logical objects, in the form of Boolean equations, each logical object being representative of a status of a field object, the sets of logical objects being chained according to blockchain principles in order to ensure that the set of logical objects are tamper-proof safe. The sets of logical objects are processed by each of the ATC system 30, the HMI 16 and the field object controller 40 as explained in further detail hereafter, in order to ensure safe and distributed interlocking. In order to execute this processing, the ATC system 30 implements a smart contract execution engine 76, the HMI 16 implements a smart contract execution engine 78 and each field object controller 40 implements a smart contract execution engine 80.

According to an embodiment, each smart contract execution engine is implemented in the form of software comprising code instructions which are executable by the processor.

Each smart contract execution engine may be stored on a non-volatile information recording medium, such as an optical disk, a magneto-optical disk, any type of non-volatile memory (e.g. EPROM, EEPROM, FLASH, NVRAM), a magnetic card or and optical card.

In an alternative embodiment, each smart contract execution engine is implemented by a FPGA (Field Programmable Gate Array), or a dedicated integrated circuit such as an ASIC (Applications Specific Integrated Circuit).

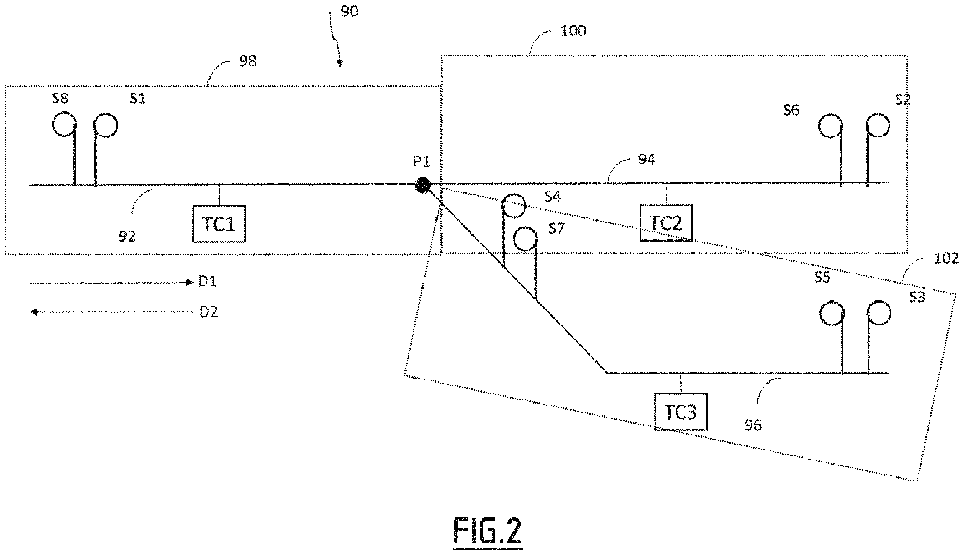

Figure 2 shows a schematic example of tracks and associated track field objects.

The track 90 comprises three sections referenced 92, 94 and 96, which can be actually used by trains. For example, a given train may run on the track sections 92, 94 or 92, 96, either following the up direction D1 or following the down direction D2.

The track 90 has several associated track field objects: a point machine P1, a first track circuit TC1 associated with the first track section 92, a second track circuit TC2 associated with the second track section 94 and a third track circuit TC3 associated with the second track section 96. Furthermore, the shown layout comprises several signals associated to the track sections: signal S1, S2, S3, S4 for the up direction D1 and signals S5, S6, S7, S8 for the down direction D2.

The field objects P1, TC1, TC2, TC3, and S1...S8 are connected to a field object controller 40.

In a preferred embodiment, in order to create a chain of Boolean equations, point blocks are created around the point machine P1.

A point block (abbreviated as PB) groups Boolean equations defining the status of a given set of track field objects.

In the schematic example illustrated, three points blocks PB1, PB2 and PB3 are created. The first point block PB1 is associated to a first set of track field objects 98, the second point block PB2 is associated to a second set of track field objects 100 and the third point block PB3 is associated to a third set of track field objects 102.

All the track field objects of a set associated to a point block are connected to a same field object controller.

The first set of track field objects 98 comprises the point machine P1, the track circuit TC1, the signals S1 and S8.

The second set of track field objects 100 comprises the track circuit TC2, the signals S2 and S6.

The third set of track field objects 102 comprises the track circuit TC3, the signals S3, S4, S5 and S7.

The Boolean equations of the point blocks PB1, PB2 and PB3 expressed for the up direction D1 are the following:

$$(BE)PB1Normal = (!TC1)\& (S1\_Green)\&(S8\_Red)\& (P1\ Normal)$$

$$(BE)PB1Reverse = (!TC1)\& (S1\_Green)\&(S8\_Red)\& (P1\ Reverse)$$

$$(BE)PB2 = (!TC2)\& (S2\_Red)\&(S6\_Red)$$

$$(BE)PB3 = (!TC3)\& (S4\_Green)\&(S3\_Red)\ \&(S5\_Red)\ \&(S7\_Red)$$

For a given track circuit referenced TCi, !TCi means that the corresponding track section is not occupied (i.e. the track is available).

For example, in order to allow a given train to follow the route between S1 and S2 in the up direction D1, the following Boolean equation defining the status of the associated field objects should be implemented:

$$(BE)S1->S2: (BE)PB1Normal\ \&\ (BE)PB2$$

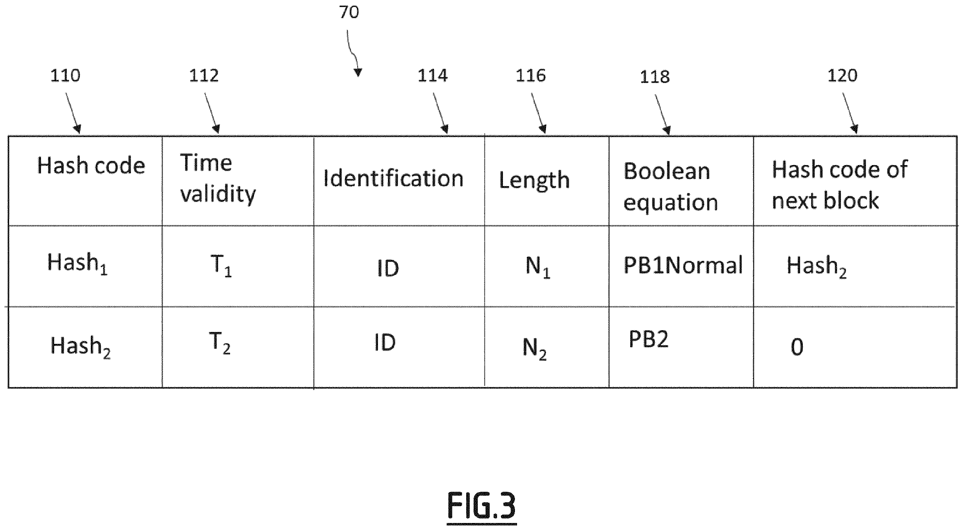

Figure 3 shows an example of smart contract 70 corresponding to the route between S1 and S2 in the up direction D1.

In the embodiment illustrated, a smart contract 70 is represented in the form of a table, comprising several fields which are: Hash code 110, Time validity 112, Identification 114, Length 116, Boolean Equation 118 and Hash code of next block 120.

The smart contract 70 of figure 3 comprises two lines corresponding to two respective point blocks.

According to an alternative, a different smart contract may be created for each point block, and then the smart contracts are gathered and ordered for execution by each smart contract execution engine.

The field 110, for example encoded on 128 bits, comprises a hash code of the values of the following fields 112, 114, 116 and 118 corresponding to the same line of the smart contract, i.e. to the same point block. For example, MD5 checksum is used. Alternatively, other hash code or checksum, less computationally expensive than MD5, may be used.

The field 112, for example encoded on 32 bits, indicates the time validity, which is a relative time since the reception of the smart contract. For example, the time validity is computed with respect to the speed of the train and the distance of the train from the track section concerned by the corresponding line of the smart contract. The ATS system 2 computes the relative time validity based on the digital twin model of the on-board ATC system 30.

The field 114 called "Identification" provides information (ID) relative to the associated train Id, for example encoded on 32 bits, the associated HMI Id, for example encoded on 32 bits, a number of associated field object controllers, and a list of identifiers of said associated track field object controllers, for example encoded on 8 bits, and a list of identifiers of said associated track field object controllers, for example encoded on 32 bits for each field object controller identifier. The length of field 114 is variable and depends on the number of field object controllers which are identified.

The field 116, for example encoded on 32 bits, indicates the exact length of the next field 118 which encodes the Boolean equation of the point block.

The field 120, for example encoded on 128 bits, comprises a hash code of the values of the fields 112, 114, 116 and 118 corresponding to following point block, in order to ensure a block chain of links between the point blocks. As shown on figure 3, the value of field 120 on the first line of the smart contract illustrated, corresponding to the point block PB1 in the example, is the same as the value of the field 110 of the second line of the smart contract illustrated, corresponding to the point block PB2 in the example. If there is no following point block, or to indicate the end of the smart contract, the value of field 120 is equal to zero.

Advantageously, the field 120 comprises non-tamperable chaining information indicating an order of successive execution of blocks of logical objects, ensuring that the point blocks are chained according to a predetermined order. Therefore, the smart contracts for each point block may be transmitted separately, since it is possible to order them sequentially according to the predetermined order after reception, even if they are received in reversed order.

Advantageously, using a hash code, such as MD5 checksum, makes the chaining secure.

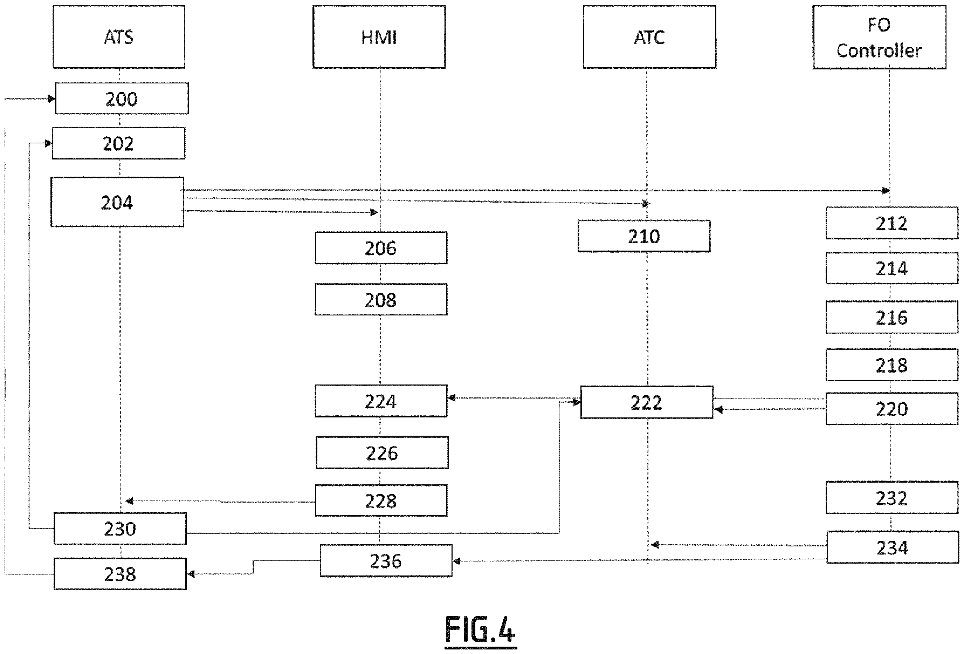

A method for distributed interlocking of track field objects of a railway network, implemented in a system for distributed interlocking as described above will now be described with reference to figure 4.

As already explained, several entities which are the ATS system 2, the HMI 16, the on-board ATC 30 and one or several field object controllers 40 cooperate to achieve distributed interlocking using blockchained smart contracts.

Firstly, the ATS 2 generates (step 200) a route profile for a train from a starting point (station A) to an end point (station B), using the control table 72 which memorizes the routes, and associated field objects and the associated centralized Boolean database 74 which memorizes all Boolean equations. Furthermore, a mapping between the field object controllers and the corresponding controlled field objects is also stored.

Next, at 202, the ATS 2 computes, on request from an ATC onboard of a given train or from a HMI, a smart contract for a track section and a given ATC. The module 62 computing the digital twin of onboard ATC is used. In a known manner, the module 62 receives real-time information relating to the train such as speed, acceleration, and geolocalization. The module 62 implements a digital model of the ATC and, from the received data, predicts the train distance, speed or acceleration for the train movement alongside the field objects associated to the tracks.

At 204, the computed smart contract is distributed to the ATC 30 and the field object controllers 40, through wireless communication links 32, 58 and to the HMI 16 through the wired communication link 14.

At reception of a smart contract 70, an "event" triggering the execution of the received smart contract is raised at each of the receiving entities.

In order to ensure that the smart contract is executed by the intended entities, each receiving entity will verify its identity from the identification field 114.

On reception of a smart contract 70, the smart contract execution engine of the HMI 16 extracts at 206 the list of track field objects associated with the smart contract from the Boolean equation field 118. According to an embodiment, the smart contract execution engine of the HMI 16 further verifies the hash code, i.e. computes the MD5 checksum of the values of the fields 112, 114, 116 and 118 and compares this value with the value transmitted in field 110, and in case of negative result of the comparison, raises an alarm to ATS for redistributing the smart contract again (step 204).

Furthermore, the smart contract execution engine of the HMI 16 draws (at 208) an expected track layout for a train movement. The expected layout is displayed on a display 18 of the HMI 16.

On reception of a smart contract 70, the smart contract execution engine of the on-board ATC 30 extracts at 210 the list of track field objects associated with the smart contract from the Boolean equation field 118 and waits for the arrival of the status of the field objects from the associated field object controllers.

On reception of a smart contract 70, the smart contract execution engine of each field object controller 40 extracts at 212 the list of track field objects associated with the smart contract from the Boolean equation field 118 and the field object status to be set from the Boolean equation field 118.

Then at 214 the field object controller commands the expected output to be set by each signal and point machine, for example in the form of relay switch for the point machine, on/off command to each signal. After a predetermined time lapse, the readback of the status of all track field objects such as track circuit, signal and point machines is received at 216. During execution of a given smart contract, the status set for the signals and point machines are frozen.

According to an embodiment, a point machine is operated with the help of switch motor. Field Object Controller 40 cuts off the power feed to the switch motor once the switch motor is set and locked in appropriate state i.e. point status is set appropriately as normal/reverse. This ensures that the switch motor state is 'frozen' i.e. there is no further movement. If the expected status can't be set within the readback time i.e. due to switch motor or other fault issues, this failure status will be reported to HMI and ATC appropriately as the "error flag" to inhibit the train movement.

The power feed to the other lamps of the signal (For example, RED / GREEN) will be cut off by Field Object Controller 40. For example, if the expected signal state is RED, the signal lamp of RED only will be powered ON. The power feed to other signal lamps for GREEN will be cut off by using appropriate relays. If there is an issue with GREEN lamp, RED lamp will be activated as a safe state. If there is an issue with RED lamp, all the lamps will be in flicker state showing no signal status for further movement which leads to safe stopping of the trains. These faulty signal statuses will be reported to HMI and ATC appropriately as the "error flag" to inhibit the train movement.

The received status data is compared to the expected status at 218, and in case of negative comparison, i.e. if any field object has an actual status different from the expected status, a report comprising an error flag is generated. The error flag may be completed with data indicating which field object status differs from the expected field object status. Otherwise, in case of positive comparison, the report comprises a "no-error" flag.

A report is sent at 220, comprising the result of the comparison, i.e. either an error flag of a no-error flag, meaning that the status of each field object corresponds to the expected status obtained from executing the point block Boolean equations.

If there is more than one request triggered by a smart contract for a same field object controller within the time band, the field object controller may refuse the requests and return a corresponding "conflict" flag to the ATC 30 and to the HMI 16 at step 220. Alternatively, in case of conflict, all the smart contracts 70 are sent back to the ATC 30 and to the HMI 16 at step 220.

On receipt of a report from the field object controller, for all field objects related with a given smart contract 70, the smart contract execution engine of the on-board ATC 30 executes the smart contract at 222. The execution of the smart contract comprises checking whether the train can proceed or should stop, and commanding the train accordingly (e.g. continue at constant speed, or accelerate, or decelerate or stop). In particular, the train movement is inhibited if an error flag is received, meaning for example that a given section of track is already occupied, a point machine is not set appropriately, a faulty signal lamp etc, in order to avoid a potential collision.

On receipt of a report from the field object controller, for all field objects related with a given smart contract 70, the smart contract execution engine of the HMI 16 extracts the status information from the reports received at 224, and draws at 226 the actual track layout. The expected track layout is also displayed on the display 18, for example on the same screen so that an operator can easily visualize the differences indicating a possible faulty track circuit or erroneous status set.

If the comparison between the expected track layout and the actual track layout shows differences, or if an error or conflict flags are received, a specific "no consensus" information is sent to the ATS at 228.

On receipt, the ATS transfers the information to the ATC at step 230 to inhibit further train movement.

Furthermore, on receipt of a "no consensus" information, the ATS computes new smart contracts (step 202).

As indicated above, each line or block of a smart contract corresponds to a point block.

Once a train has travelled a given track section, the corresponding point block is released.

The field object controller 40 listens to status information sent by each field object, and when all the track circuits involved in the smart contract have returned a "not occupied" status, all the signals status set to "restrictive" state and all the point status to "normal" state, the point block is released (step 232).

The output of all the steps involved in the method for distributed interlocking (as shown in Fig. 4) will be logged into the respective blockchain distributed ledgers 49, 29, 27 and blockchain master ledger archival 10. For example, FO controller stores all the logs related to steps 212 to 234 along with the timestamp in blockchain distributed ledger 49. The blockchain master ledger archival 10 at the control center also maintains the backup of all the blockchain distributed ledger data 40, 29, 27 from field object controller 40, ATC 30 and HMI 16 so as to ensure tamper proof and secured logging of all the events linked with distributed interlocking method.

An information relative to the point block release is transmitted (step 234) to the ATC 30 and to the HMI 16. In an embodiment, a hash code 110 of the released point block is sent at step 234. At ATC 30 and HMI 16, after time validity T1 (field 112 of smart contract 70) or on the reception of release status from step 234, "smart contract" will be erased physically from its internal temporary storage, but the event will be archived into blockchain distributed ledger database.

At HMI 16, after time validity T1 or on the reception of release status, the released Point block status will be reset to initial default status such as track circuit status is unoccupied, signal is in restrictive state and point machine status to default 'normal' state.

The HMI forwards the point block release information to the ATS at step 236.

The ATS identifies the points block based on the received information, for example based on the MD5 checksum, and updates the information relative to the identified point block at 238: the identified point block may be allocated in a new smart contract for another train.

Advantageously, the latency in the overall operational cycle is improved as compared to a centralized interlocking system, due to the distribution of smart contracts and the distributed computations on several entities: ATS 2, ATC 30, HMI 16, Field object controllers 40.

Advantageously, the on-board storage is minimized, since there is no need to store on-board the Boolean equations.

Advantageously a single master Boolean database is maintained at the ATS 2, therefore the centralized storage is easy to maintain and to upgrade if necessary.

Thanks to the digital twin computations, it is possible to precisely predict the times at which each train crosses field objects along the track, and the smart contracts for the interlocking command are dynamically generated in real-time.

Advantageously, due to the use of blockchain technology, the distributed interlocking system is tamper-proof.

Advantageously, security checks may be performed by all the entities, so the security is improved without significant cost raise.

**Claims**

1. System for distributed interlocking of track field objects of a railway network comprising

   a train comprising an onboard automatic train control system,
   a central automatic train supervision system (2) comprising a wireless communication interface (6) adapted to communicate with the onboard automatic train control system (30), and at least one field object controller (40),
   each field object controller (40) being connected via a communication link (51, 53, 55) to at least one track field object (50, 52, 54) and being configured to receive status information from said track field object (50, 52, 54) and to command a change of status of said track field object (50, 52),
   wherein the central automatic train supervision system (2) comprises at least one processor (4) configured to:

      - generate (202) smart contracts (70), a smart contract comprising at least one block (118) of logical objects, in the form of Boolean equation, each logical object being representative of a track field object associated to at least one section of track to be travelled by said train,
      - send (204) the generated smart contracts for execution to at least one field object controller (40) and to the onboard automatic train control system of a train (30),

   each smart contract (70) comprising non-tamperable chaining information (120) indicating an order of successive execution of blocks of logical objects,
   and wherein at least one field object controller (40) comprises a processor (42), adapted to implement a smart contract execution engine (80) and the onboard automatic train control system (30) comprises a processor (34) adapted to implement a smart contract execution engine (76).

2. The system according to claim 1, wherein the central automatic supervision system (2) comprises an electronic database (8) storing a control table (72) for memorizing routes and associated track field objects and a centralized Boolean database (74) memorizing Boolean equations associated to track sections.

3. - The system according to claims 1 to 2, wherein the non-tamperable chaining information (120) indicating an order of successive execution of blocks of logical objects is obtained by indicating, in the smart contract, for each block of logical objects, a hash code of a next block of logical objects to execute.

4. The system according to claim 3, wherein each smart contract (70) further comprises for each block of logical objects, a hash code (110) of data relative to said block of logical object and identification data (114) for identifying an associated train, a number of associated track field object controllers, and a list comprising identifiers of said track field object controllers.

5. - The system according to claims 3 to 4, wherein each smart contract (70) further comprises, for each block of logical objects, time validity information (112) associated to the block of logical objects.

6. The system according to claims 1 to 5, wherein the smart contract execution engine (80) of the field object controller is configured to extract (212) a list of track field objects from a received smart contract and associated expected status of said track field objects, and to command (214) the setting of the said track field objects in the expected status.

7. The system according to claim 6, wherein the smart contract execution engine (80) of the field object controller is configured to receive (216) an output status from said track field objects, to compare (218) expected status to output status of the track field objects, to generate a report comprising information on the output status of the track field objects, and to send (220) the generated report to the onboard automatic train control system.

8. The system according to claim 7, wherein the onboard automatic train control system is configured to command or to inhibit (222) train movement based on the report comprising information on the output status of the track field objects received.

9. The system according to claims 1 to 8, further comprising a human machine interface (16), comprising a communication interface adapted to communicate with the central automatic train supervision system (2) and a processor (22) adapted to implement a smart contract execution engine (78), and wherein the central automatic supervision system (2) is configured to send the generated smart contract to said human machine interface (16).

10. The system according to claim 9, wherein the smart contract execution engine (78) of the human machine interface is adapted to display comparative data to compare received information on the output status of the track field objects and expected status of the track field objects, and in case of negative comparison, to transmit (228) an error flag to the central automatic supervision system.

11. The system according to claims 1 to 10, wherein the track field objects comprise signals (50), point machines (52) and track circuits (54).

**Patentansprüche**

1. System zur verteilten Verriegelung von Gleisfeldobjekten eines Eisenbahnnetzwerks, umfassend

einen Zug mit einem fahrzeugseitigen automatischen Zugbeeinflussungssystem,
ein zentrales automatisches Zugüberwachungssystem (2), umfassend eine drahtlose Kommunikationsschnittstelle (6), die angepasst ist, um mit dem fahrzeugseitigen automatischen Zugbeeinflussungssystem (30) zu kommunizieren, und mindestens eine Feldobjektsteuerung (40), wobei jede Feldobjektsteuerung (40) über eine Kommunikationsverbindung (51, 53, 55) mit mindestens einem Gleisfeldobjekt (50, 52, 54) verbunden ist und konfiguriert ist, um Statusinformationen von dem Gleisfeldobjekt (50, 52, 54) zu empfangen und eine Statusänderung des Gleisfeldobjekts (50, 52) zu befehlen,
wobei das zentrale automatische Zugüberwachungssystem (2) mindestens einen Prozessor (4) umfasst, der zu Folgendem konfiguriert ist:

- Erzeugen (202) von intelligenten Verträgen (70), wobei ein intelligenter Vertrag mindestens einen Block (118) logischer Objekte in Form einer booleschen Gleichung umfasst, wobei jedes logische Objekt ein Gleisfeldobjekt darstellt, das mit mindestens einem Gleisabschnitt assoziiert ist, der von dem Zug befahren werden soll,
- Senden (204) der erzeugten intelligenten Verträge zur Ausführung an mindestens eine Feldobjektsteuerung (40) und an das fahrzeugseitige automatische Zugbeeinflussungssystem eines Zugs (30),

jeder intelligente Vertrag (70) umfassend nicht manipulierbare Verkettungsinformationen (120), die eine Reihenfolge von aufeinanderfolgender Ausführung von Blöcken logischer Objekte angeben,
und wobei mindestens eine Feldobjektsteuerung (40) einen Prozessor (42) umfasst, der angepasst ist, um eine intelligente Vertragsausführungsmaschine (80) zu implementieren, und das fahrzeugseitige automatische Zugbeeinflussungssystem (30) einen Prozessor (34) umfasst, der angepasst ist, um eine intelligente Vertragsausführungsmaschine (76) zu implementieren.

2. System nach Anspruch 1, wobei das zentrale automatische Überwachungssystem (2) eine elektronische Datenbank (8) umfasst, in der eine Steuerungstabelle (72) zum Speichern von Strecken und assoziierten Gleisfeldobjekten und eine zentrale Boolesche Datenbank (74) zum Speichern von Booleschen Gleichungen, die mit Gleisabschnitten assoziiert sind, gespeichert sind.

3. System nach einem der Ansprüche 1 bis 2, wobei die nicht manipulierbaren Verkettungsinformationen (120), die eine Reihenfolge der aufeinanderfolgenden Ausführung von Blöcken logischer Objekte angeben, dadurch erlangt werden, dass in dem intelligenten Vertrag für jeden Block logischer Objekte ein Hash-Code eines nächsten Blocks auszuführender logischer Objekte angegeben ist.

**4.** System nach Anspruch 3, wobei jeder intelligente Vertrag (70) ferner für jeden Block logischer Objekte einen Hash-Code (110) von Daten in Bezug auf den Block logischer Objekte und Identifikationsdaten (114) zur Identifizierung eines assoziierten Zugs, eine Anzahl assoziierter Gleisfeldobjektsteuerungen und eine Liste umfassend Kennungen der Gleisfeldobjektsteuerungen umfasst.

**5.** System nach einem der Ansprüche 3 bis 4, wobei jeder intelligente Vertrag (70) ferner für jeden Block logischer Objekte Zeitgültigkeitsinformationen (112) umfasst, die mit dem Block logischer Objekte assoziiert sind.

**6.** System nach einem der Ansprüche 1 bis 5, wobei die intelligente Vertragsausführungsmaschine (80) der Feldobjektsteuerung konfiguriert ist, um eine Liste von Gleisfeldobjekten aus einem empfangenen intelligenten Vertrag und dem assoziierten erwarteten Status der Gleisfeldobjekte zu extrahieren (212) und die Einstellung der Gleisfeldobjekte in den erwarteten Status zu befehlen (214).

**7.** System nach Anspruch 6, wobei die intelligente Vertragsausführungsmaschine (80) der Feldobjektsteuerung konfiguriert ist, um einen Ausgabestatus von den Gleisfeldobjekten zu empfangen (216), den erwarteten Status mit dem Ausgabestatus der Gleisfeldobjekte zu vergleichen (218), einen Bericht zu erzeugen, der Informationen über den Ausgabestatus der Gleisfeldobjekte enthält, und den erzeugten Bericht an das fahrzeugseitige automatische Zugbeeinflussungssystem zu senden (220).

**8.** System nach Anspruch 7, wobei das fahrzeugseitige automatische Zugbeeinflussungssystem konfiguriert ist, um basierend auf dem Bericht, der Informationen über den Ausgangszustand der empfangenen Gleisfeldobjekte enthält, die Zugbewegung zu befehlen oder zu sperren (222).

**9.** System nach einem der Ansprüche 1 bis 8, ferner umfassend eine Mensch-Maschine-Schnittstelle (16), umfassend eine Kommunikationsschnittstelle, die für die Kommunikation mit dem zentralen automatischen Zugüberwachungssystem (2) angepasst ist, und einen Prozessor (22), der zum Implementieren einer intelligenten Vertragsausführungsmaschine (78) angepasst ist, und wobei das zentrale automatische Überwachungssystem (2) konfiguriert ist, um den erzeugten intelligenten Vertrag an die Mensch-Maschine-Schnittstelle (16) zu senden.

**10.** System nach Anspruch 9, wobei die intelligente Vertragsausführungsmaschine (78) der Mensch-Maschine-Schnittstelle angepasst ist, um Vergleichsdaten anzuzeigen, um empfangene Informationen über den Ausgabestatus der Gleisfeldobjekte und den erwarteten Status der Gleisfeldobjekte zu vergleichen, und im Fall eines negativen Vergleichs ein Fehlerflag an das zentrale automatische Überwachungssystem zu übermitteln (228).

**11.** System nach einem der Ansprüche 1 bis 10, wobei die Gleisfeldobjekte Signale (50), Weichenantriebe (52) und Gleisstromkreise (54) umfassen.

**Revendications**

**1.** Système d'interverrouillage distribué d'objets de terrain de voie d'un réseau ferroviaire comprenant

un train comprenant un système de contrôle automatique embarqué,
un système central de supervision automatique des trains (2) comprenant une interface de communication sans fil (6) adaptée pour communiquer avec le système de contrôle automatique des trains embarqué (30), et au moins un contrôleur d'objets de terrain (40), chaque contrôleur d'objets de terrain (40) étant connecté par le biais d'une liaison de communication (51, 53, 55) à au moins un objet de terrain de voie (50, 52, 54) et étant configuré pour recevoir des informations sur l'état dudit objet de terrain de voie (50, 52, 54) et pour commander un changement d'état dudit objet de terrain de voie (50, 52),
dans lequel le système central de supervision automatique des trains (2) comprend au moins un processeur (4) configuré pour :

- générer (202) des contrats intelligents (70), un contrat intelligent comprenant au moins un bloc (118) d'objets logiques, sous forme d'équation booléenne, chaque objet logique étant représentatif d'un objet de champ de voie associé à au moins une section de voie à parcourir par ledit train,
- envoyer (204) les contrats intelligents générés pour exécution à au moins un contrôleur d'objets de terrain (40) et au système de commande automatique de train embarqué d'un train (30),

chaque contrat intelligent (70) comprenant des informations de chaînage non modifiables (120) indiquant un ordre d'exécution successif de blocs d'objets logiques,

et dans lequel au moins un contrôleur d'objet de terrain (40) comprend un processeur (42), adapté pour mettre en oeuvre un moteur d'exécution de contrat intelligent (80) et le système de contrôle automatique de train embarqué (30) comprend un processeur (34) adapté pour mettre en oeuvre un moteur d'exécution de contrat intelligent (76).

2. Système selon la revendication 1, dans lequel le système central de supervision automatique (2) comprend une base de données électronique (8) stockant une table de contrôle (72) pour la mémorisation des itinéraires et des objets associés au champ de voie et une base de données booléenne centralisée (74) mémorisant les équations booléennes associées aux sections de voie.

3. - Système selon les revendications 1 à 2, dans lequel les informations de chaînage non falsifiables (120) indiquant un ordre d'exécution successif des blocs d'objets logiques sont obtenues en indiquant, dans le contrat intelligent, pour chaque bloc d'objets logiques, un code de hachage d'un prochain bloc d'objets logiques à exécuter.

4. Système selon la revendication 3, dans lequel chaque contrat intelligent (70) comprend en outre, pour chaque bloc d'objets logiques, un code de hachage (110) des données relatives audit bloc d'objets logiques et des données d'identification (114) permettant d'identifier un train associé, un nombre de contrôleurs d'objets de voie associés et une liste comprenant les identifiants desdits contrôleurs d'objets de voie.

5. - Système selon les revendications 3 à 4, dans lequel chaque contrat intelligent (70) comprend en outre, pour chaque bloc d'objets logiques, des informations de validité temporelle (112) associées au bloc d'objets logiques.

6. Système selon les revendications 1 à 5, dans lequel le moteur d'exécution de contrat intelligent (80) du contrôleur d'objets de terrain est configuré pour extraire (212) une liste d'objets de terrain de voie à partir d'un contrat intelligent reçu et d'un état attendu associé à ces objets de terrain de voie, et pour commander (214) la mise en place de ces objets de terrain de voie dans l'état attendu.

7. Système selon la revendication 6, dans lequel le moteur d'exécution de contrat intelligent (80) du contrôleur d'objets de terrain est configuré pour recevoir (216) un état de sortie desdits objets de terrain, afin de comparer (218) l'état attendu à l'état de sortie des objets de terrain, pour générer un rapport comprenant des informations sur l'état de sortie des objets de terrain, et pour envoyer (220) le rapport généré au système de contrôle automatique des trains à bord.

8. Système selon la revendication 7, dans lequel le système de contrôle automatique des trains à bord est configuré pour commander ou inhiber (222) le mouvement du train sur la base du rapport comprenant des informations sur l'état de sortie des objets du champ de voie reçus.

9. Système selon les revendications 1 à 8, comprenant en outre une interface homme-machine (16), comprenant une interface de communication adaptée pour communiquer avec le système central de supervision automatique des trains (2) et un processeur (22) adapté pour mettre en oeuvre un moteur d'exécution de contrat intelligent (78), et dans lequel le système central de supervision automatique (2) est configuré pour envoyer le contrat intelligent généré à ladite interface homme-machine (16).

10. Système selon la revendication 9, dans lequel le moteur d'exécution de contrat intelligent (78) de l'interface homme-machine est adapté pour afficher des données comparatives permettant de comparer les informations reçues sur l'état de sortie des objets du champ de voie et l'état attendu des objets du champ de voie, et en cas de comparaison négative, pour transmettre (228) un indicateur d'erreur au système central de supervision automatique.

11. Système selon les revendications 1 à 10, dans lequel les objets du champ de voie comprennent des signaux (50), des moteurs d'aiguille (52) et des circuits de voie (54).

**FIG.1**

FIG.2

| Hash code | Time validity | Identification | Length | Boolean equation | Hash code of next block |
|-----------|---------------|----------------|--------|------------------|-------------------------|
| $Hash_1$ | $T_1$ | ID | $N_1$ | PB1Normal | $Hash_2$ |
| $Hash_2$ | $T_2$ | ID | $N_2$ | PB2 | 0 |

70

110 112 114 116 118 120

## FIG.3

EP 3 763 596 B1

FIG.4

EP 3 763 596 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1769996 A2